# EUROPÄISCHE PATENTANMELDUNG

(11) **EP 4 699 818 A1**
(43) Veröffentlichungstag der Anmeldung: **25.02.2026**
(21) Anmeldenummer: 25189821.9
(22) Anmeldetag: 16.07.2025
(51) Int. Cl.: B60C 11/04, B60C 11/13, B60C 11/03

(54) **FAHRZEUGREIFEN**

(30) Priorität: 22.08.2024 DE 102024208027
(71) Anmelder: Continental Reifen Deutschland GmbH, 30175 Hannover (DE)
(72) Erfinder: Behr, Ulrich, 30175 Hannover (DE); Henneberger, Ben, 30175 Hannover (DE)
(74) Vertreter: Continental Corporation

(57) **Zusammenfassung**

Die Erfindung betrifft einen Fahrzeugreifen mit einem Laufstreifen mit Rillen (1, 1', 1", 1‴) mit einer maximalen Tiefe (T_{UR}) von 30% bis 100% der Profiltiefe, einer Breite (B_{UR}) an der breitesten Stelle von 5,00 mm bis 15,00 mm und einer Rilleninnenfläche (4, 5), wobei zumindest ein Teil der Rilleninnenfläche (4, 5) von einer facettenschliffartigen Flächenanordnung (F, F', F", F‴) mit vorspringenden Knickkanten (K₁) und rückspringenden Knickkanten (K₂) eingenommen ist, wobei die facettenschliffartige Flächenanordnung (F, F', F", F‴) aus an den Knickkanten (K₁, K₂) aneinander anschließenden, dreieckigen Facetten (6a, 6b, 7a, 7b, 8) gebildet ist und wobei die Knickkanten (K₁, K₂) an Kantenanschlusspunkten (P₂, P₃, P₄, P₅, P₆, P₇) zusammentreffen,

Zu den Kantenanschlusspunkten (P₂, P₃, P₄, P₅, P₆, P₇) gehören solche, an welchen zumindest sechs Knickkanten (K₁, K₂) der facettenschliffartigen Flächenanordnung (F, F', F", F‴) zusammentreffen.

## Beschreibung

Die Erfindung betrifft einen Fahrzeugreifen mit einem Laufstreifen mit in Draufsicht langgestreckten Rillen mit insbesondere an der Laufstreifenperipherie verlaufenden Rillenkanten, einer maximalen Tiefe von 30% bis 100% der Profiltiefe, einer als kleinstmöglichen Abstand zwischen den Rillenkanten ermittelten Breite an der breitesten Stelle von 5,00 mm bis 15,00 mm und einer bis zu den Rillenkanten reichenden, über die komplette Rille ausgebildeten, diese begrenzenden Rilleninnenfläche, wobei zumindest ein Teil der Rilleninnenfläche von einer facettenschliffartigen Flächenanordnung mit vorspringenden Knickkanten und rückspringenden Knickkanten eingenommen ist, wobei die facettenschliffartige Flächenanordnung aus an den Knickkanten aneinander anschließenden, dreieckigen Facetten gebildet ist und wobei die Knickkanten an Kantenanschlusspunkten zusammentreffen.

Ein derartiger Fahrzeugreifen, welcher ein Nutzfahrzeugreifen ist, ist beispielsweise aus der EP 2 292 448 A1 bekannt. Dieser Nutzfahrzeugreifen weist einen Laufstreifen mit zumindest zwei Umfangsrillen auf, wobei das Rillenvolumen im Laufstreifen 1% bis 10% des Laufstreifen-Bruttovolumens beträgt, wodurch ein geringer Rollwiderstand erzielt wird. Gemäß einem Ausführungsbeispiel weisen die Umfangsrillen eine maximale Tiefe von 10 mm bis 25 mm, eine Breite von 5 mm bis 20 mm, in Draufsicht gerade verlaufende Rillenkanten, einen in Draufsicht zickzackförmig verlaufenden Rillengrund und Rillenwände auf. Die Rillenwände sind auf korrelierende Weise zum Zickzackverlauf der Rillengrunds jeweils von einer facettenschliffartigen Flächenanordnung, welcher in Umfangsrichtung aufeinanderfolgende pyramidenförmige Vorsprüngen zugrunde liegen, eingenommen, wobei die Pyramidenspitzen einem einspringenden Eck des Rillengrunds zugeordnet sind. Die facettenschliffartige Flächenanordnung ist von dreieckigen Facetten gebildet, welche die Vorsprünge begrenzen und welche an Knickkanten aneinander anschließen, die ihrerseits an Kantenanschlusspunkten zusammentreffen. In solchen Umfangsrillen soll die Wahrscheinlichkeit, dass sich Steine verfangenen, gering sein.

Es ist bekannt, dass bei Fahrzeugreifen der eingangs genannten Art, beim Abrollen der Reifen, am Rillengrund der Rillen infolge der auftretenden Verformungen hohe Zugspannungen auftreten. Durch diese Zugspannungen sind die Rillengründe anfällig für das Entstehen von Rissen (sogenannten "Groove Cracks"). Ferner ist es bekannt, dass die in den Rillen stattfindende Schallausbreitung zum Entstehen des Reifen-Fahrbahn-Geräusches beträgt. Um der Schallausbreitung entgegenzuwirken, ist es üblich, als "Schallbrecher" wirkende Vorsprünge (sogenannte "noise breaker") in den Rillen auszubilden, welche - je nach Ausgestaltung - häufig mit einer deutlichen Verringerung des lokalen Rillenquerschnitt einhergehen, wodurch das Wasserdrainagevermögen leidet. In dieser Hinsicht sind die bei Fahrzeugreifen der eingangs genannten Art vorgesehenen facettenschliffartigen Flächenanordnungen bereits günstig, da sie - im Gegensatz zu üblichen Schallbechern - zu einer Reduktion des Reifen-Fahrbahn-Geräusches beitragen und den Rillenquerschnitt kaum verringern, wobei diese Flächenanordnungen bisher im Hinblick auf Rissbeständigkeit noch verbesserungsbedürftig sind.

Der Erfindung liegt die Aufgabe zugrunde, bei einem Fahrzeugreifen der eingangs genannten Art, die Gefahr des Auftretens von Rissen im Bereich des an die Rillen angrenzen Gummimaterials merklich zu reduzieren, wobei ein geringes Reifen-Fahrbahn-Geräusch erhalten bleiben soll.

Gelöst wird die gestellte Aufgabe erfindungsgemäß dadurch, dass zu den Kantenanschlusspunkten solche gehören, an welchen zumindest sechs Knickkanten der facettenschliffartigen Flächenanordnung zusammentreffen.

Eine derart verschachtele facettenschliffartige Flächenanordnung sorgt für eine besonders gleichmäßige Verteilung, insbesondere eine Zerstreuung, der über die Rillenwände in die Rillen beim Abrollen eingetragenen Spannungen, sodass die Gefahr des Auftretens von Rissen im Bereich des an die Rillen angrenzenden Gummimaterials signifikant reduziert ist. Gleichzeitig sorgt die Flächenanordnung für eine inhomogene Steifigkeit im Bereich der Rillenwände, wodurch das Reifen-Fahrbahn-Geräusch einen besonders breiten Frequenzbereich aufweist, in der Folge deutlich weniger positive Geräuschinterferenzen auftreten und derart ein geringes Reifen-Fahrbahn-Geräusch erhalten bleibt.

Gemäß einer bevorzugten Ausführung nimmt bzw. nehmen die facettenschliffartige(n) Flächenanordnung(en) zumindest 25%, bevorzugt zumindest 40%, besonders bevorzugt zumindest 50%, am meisten bevorzugt 75% bis 100%, des Flächeninhalts der Rilleninnenfläche ein. Dies trägt insbesondere zu einer besonders effizienten Unterdrückung der positiven Geräuschinterferenzen bei.

Gemäß einer weiteren bevorzugten Ausführung gehören zu den Kantenanschlusspunkten solche, an welchen jeweils zumindest eine, bevorzugt zumindest zwei, besonders bevorzugt zumindest drei, vorspringende Knickkante(n) und zumindest eine, bevorzugt zumindest zwei, besonders bevorzugt zumindest drei, rückspringende Knickkante(n) zusammentreffen. Auch diese Maßnahme trägt zu einer zusätzlichen Reduktion von positiven Interferenzen der Schallwellen bei.

Ferner ist es günstig,
wenn zu den Kantenanschlusspunkten solche gehören, an welchen jeweils zwei, drei, vier, fünf, sechs oder sieben Knickkanten zusammentreffen und/oder
wenn zu den Kantenanschlusspunkten solche gehören, an welchen jeweils ausschließlich vorspringende Knickkanten oder ausschließlich rückspringende Knickkanten zusammentreffen.
Diese Maßnahme führt vorrangig zur zusätzlichen Reduktion der über die Rillenwände in die Rillen beim Abrollen eingetragenen Spannungen.

Gemäß einer weiteren bevorzugten Ausführung ist die facettenschliffartige Flächenanordnung regelmäßig, wobei die dreieckigen Facetten, in Draufsicht betrachtet, in Längserstreckungsrichtung der Rille aufeinanderfolgenden, sich widerholenden Facettengruppen angeordnet sind. Eine solche Flächenanordnung ist vor allem für über den Reifenumfang reichende Umfangsrillen geeignet, da sich auf einfache Weise auf den gewünschten Umfangsrillenabschnitt "ausdehnen", also anpassen, lässt und insbesondere auch für die komplette Umfangsrille geeignet ist. Außerdem lässt sich eine solche Flächenanordnung mit der üblicherweise vorgesehenen Pitchfolge ideal kombinieren bzw. in diese integrieren.

Nachfolgend wird auf miteinander kombinierbare vorteilhafte Weiterentwicklungen der letztgenannten bevorzugten Ausführung sowie auf zu diesen vorteilhaften Weiterentwicklungen gehörende, bevorzugte Varianten eingegangen.

Gemäß einer ersten vorteilhaften Weiterentwicklung ist vorgesehen, dass aneinander anschließende Facetten, welche zu aufeinanderfolgenden Gruppen gehören, jeweils über eine der rückspringenden Knickkanten aneinander anschließen.

Bei einer zweiten vorteilhaften Weiterentwicklung ist vorgesehen, dass die Facettengruppen jeweils eine entlang der Rillenkante ermittelte Länge von 5,00 mm bis 40,00 mm, insbesondere von 10,00 mm bis 35,00 mm, bevorzugt von 15,00 mm bis 30,00 mm, aufweisen.

Eine bevorzugte Variante der zweiten vorteilhaften Weiterentwicklung gehören zu den Facettengruppen erste Facettengruppen und zweite Facettengruppen, wobei die Längen der ersten Facettengruppen übereinstimmen und die Längen der zweiten Facettengruppen übereinstimmen und wobei die Länge jeder ersten Facettengruppe kleiner ist als die Längen jeder zweiten Facettengruppe. Dies trägt zu einer weiteren Verringerung des Reifen-Fahrbahn-Geräusches bei.

In diesem Zusammenhang ist es vorteilhaft, wenn bei der bevorzugten Variante der zweiten vorteilhaften Weiterentwicklung die ersten und die zweiten Facettengruppen die einzigen Facettengruppen sind, wobei innerhalb der Rille eine der ersten Fettengruppen abwechselnd auf eine der zweiten Facettengruppen folgt.

Gemäß einer weiteren bevorzugten Ausführung ist die facettenschliffartige Flächenanordnung unregelmäßig, wobei die dreieckigen Facetten derart verschieden ausgeführt und unterschiedlich orientiert sind, dass aneinander anschließende, dreieckige Facetten keine sich widerholenden Facettengruppen bilden. Diese Maßnahme hat ein besonders geringes Reifen-Fahrbahn-Geräusch zur Folge.

Bei der letztgenannten bevorzugten Ausführung ist gemäß einer vorteilhaften Weiterentwicklung vorgesehen, dass die unregelmäßige, facettenschliffartige Flächenanordnung derart gestaltet ist, dass die dreieckigen Facetten durch ausschließliches Verschieben in Längserstreckungsrichtung der Rille nicht aufeinander abbildbar, also nicht ineinander überführbar, sind. Diese Maßnahme sorgt dafür, dass die Gefahr des Auftretens von Rissen zusätzlich reduziert ist und gleichermaßen auch das Reifen-Fahrbahn-Geräusch besonders gering ausfällt.

Gemäß einer weiteren bevorzugten Ausführung gehören zu den Rillen solche, deren Rilleninnenfläche von an die Rillenkanten anschließenden Rillenwänden und einem zwischen den radial inneren Enden der Rillenwände ausgebildeten, im Querschnitt der Rille zumindest abschnittsweise gerundet oder abschnittsweise parallel zur Laufstreifenperipherie verlaufenden Rillengrund gebildet ist, wobei mindestens ein Teil von zumindest der einen Rillenwand, insbesondere die komplette Rillenwand, von der facettenschliffartigen Flächenanordnung eingenommen ist und wobei am Rillengrund vorzugsweise keine facettenschliffartige Flächenanordnung vorhanden ist. Dies ist vor allem zusätzlich für das Wasserdrainageverhalten der Rille vorteilhaft.

Gemäß einer weiteren bevorzugten Ausführung weist jede Facettengruppe - betrachtet bei Sicht auf die Rillenwand - bezogen auf ihren äußeren Umfang die Form eines in Längserstreckungsrichtung der Rille langgestreckten Rechtecks auf und ist aus einem radial inneren Facettenbereich und einem radial äußeren Facettenbereich gebildet,
wobei der radial innere Facettenbereich von in Längserstreckungsrichtung der Rille aufeinanderfolgenden, pyramidenförmigen Erhebungen, insbesondere von zwei pyramidenförmigen Erhebungen, mit jeweils einer in die Rille einspringenden Pyramidenspitze gebildet ist, wobei jede pyramidenförmige Erhebung von zwei in radialer Richtung aufeinanderfolgende Facetten und zwei in Längserstreckungsrichtung der Rille aufeinanderfolgenden Facetten begrenzt ist und
wobei der radial äußere Facettenbereich von einer an die Rillenkante anschließenden, dreieckigen, insbesondere gleichschenkelig-dreieckigen, ersten Facette mit einer an der Rillenkante liegenden Dreieckbasis und zwei rechtwinklig-dreieckigen, zweiten Facetten gebildet ist,
wobei die erste Facette an jede zweite Facette über eine der vorspringenden Knickkanten und jede zweite Facette an die radial äußere der zwei in radialer Richtung aufeinanderfolgende Facetten, welche eine der pyramidenförmigen Erhebungen mitbegrenzen, jeweils über eine der rückspringenden Knickkanten oder über eine der vorspringenden Knickkanten anschließt.

Zur Aufrechterhaltung eines geringes Reifen-Fahrbahn-Geräusches ist es ferner vorteilhaft, wenn die Knickkanten jeweils eine Kantenlänge von 2,00 mm bis 15,00 mm aufweisen, wobei zu den Knickkanten insbesondere solche gehören, deren Kantenlänge 2,50 mm bis 10,00 mm, bevorzugt 3,00 mm bis 7,50 mm, besonders bevorzugt 4,00 mm bis 7,00 mm, am meisten bevorzugt 5,00 mm bis 6,00 mm, beträgt.

Gemäß einer noch weiteren bevorzugten Ausführung verlaufen die Rillenkanten, in Draufsicht betrachtet, gerade oder es setzen sich die Rillenkanten, in Draufsicht betrachtet, aus gerade verlaufenden Kantenabschnitten zusammen, wobei die Facetten, in in Draufsicht senkrecht zur Rillenmittellinie verlaufenden Schnitten betrachtet, zur radialen Richtung unter einem Winkel von 0° bis 55°, insbesondere von 5° bis 45°, bevorzugt von 15° bis 35°, besonders bevorzugt von 20° bis 30° verlaufen und/oder wobei die Facetten, in in Draufsicht parallel zur Laufstreifenperipherie verlaufenden Schnitten betrachtet, relativ zur in die Schnittebene in radialer Richtung projizierten Rillenmittellinie unter einem Winkel von 3° bis 25°, insbesondere von 5° bis 20°, verlaufen.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Schrägansicht auf einen Ausschnitt eines Laufstreifens eines Fahrzeugreifens im Bereich einer Umfangsrille mit einer ersten Ausführungsvariante der Erfindung,
Fig. 1a eine Schrägansicht einer Hälfte eines Abschnitts der Umfangsrille aus Fig. 1,
Fig. 1b einen vergrößerten Schnitt entlang der Linie Ib-Ib der Fig. 1,
Fig. 2 eine Schrägansicht auf einen Ausschnitt eines Laufstreifens eines Fahrzeugreifens im Bereich einer Umfangsrille mit einer zweiten Ausführungsvariante der Erfindung,
Fig. 3 eine Schrägansicht einer Hälfte eines Abschnitts einer Umfangsrille mit einer dritten Ausführungsvariante der Erfindung und
Fig. 4 eine Schrägansicht auf einen Ausschnitt eines Laufstreifens eines Fahrzeugreifens im Bereich einer Sackrille mit einer vierten Ausführungsvariante der Erfindung.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart. PKW-, Van- und SUV-Reifen sind insbesondere für Felgen mit einem ganzzahligen Felgendurchmesser von 13 Zoll bis 24 Zoll, bevorzugt von 18 Zoll bis 23 Zoll, vorgesehen und weisen einen Traglastindex von insbesondere 71 bis 126 auf.

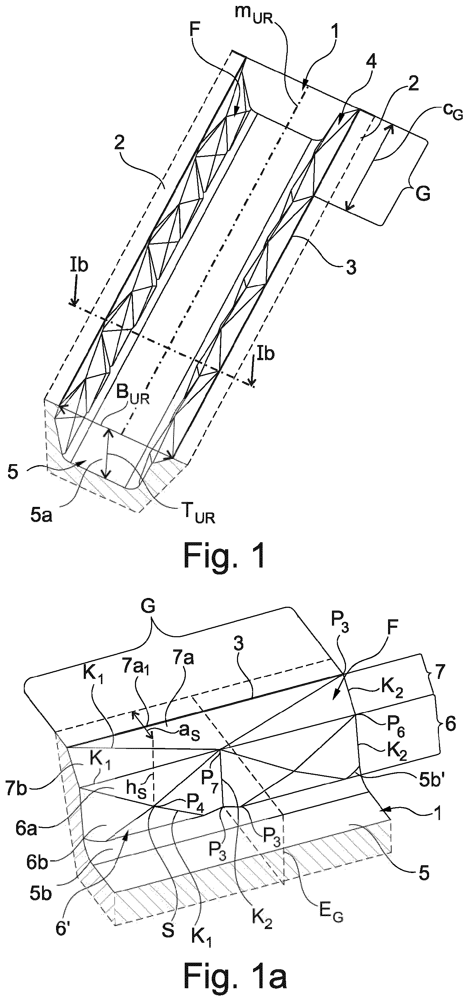

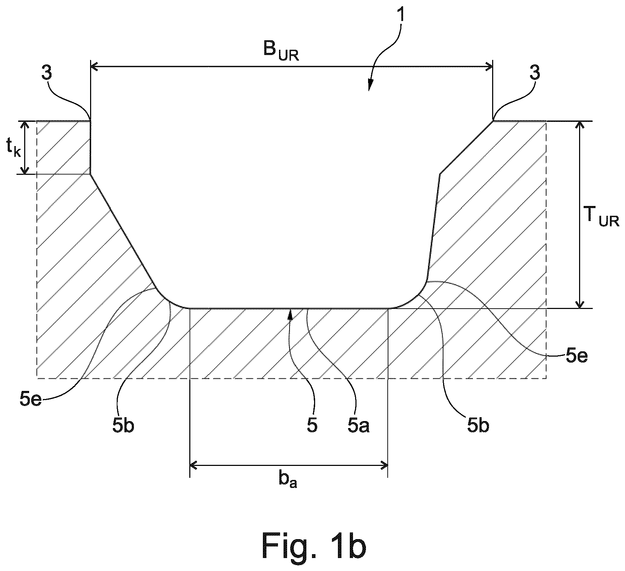

Fig. 1 zeigt eine Schrägansicht auf einen Ausschnitt eines Laufstreifens eines Fahrzeugreifens im Bereich einer in Draufsicht insgesamt gerade verlaufenden Umfangsrille 1, welche zwei in Umfangsrichtung umlaufende Profilrippen 2 voneinander trennt, wobei von den Profilrippen 2 lediglich schmale und vereinfachte Teilbereiche gezeigt sind.

Die Umfangsrille 1 weist, in Draufsicht betrachtet, zwei in der Laufstreifenperipherie liegende, gerade sowie in Umfangsrichtung verlaufende Rillenkanten 3, eine in der Laufstreifenperipherie liegende, übereinstimmend zu den Rillenkanten 3 beabstandete, gerade verlaufende Rillenmittellinie m_{UR} und eine zwischen den Rillenkanten 3 in axialer Richtung ermittelte, konstante Breite B_{UR} (vergl. Fig. 1b) von 5,00 mm bis 15,00 mm, insbesondere von zumindest 10,00 mm, auf, wobei die Umfangsrille 1 in radialer Richtung in der für den jeweiligen Reifentyp vorgesehenen Profiltiefe T_{UR} (vergl. Fig. 1b) ausgeführt ist, welche für den bevorzugten Reifentyp (PKW-, Van- oder SUV-Reifen) üblicherweise 6,50 mm bis 13,00 mm beträgt. Die Umfangsrille 1 ist durch eine bis zu den Rillenkanten 3 reichende Rilleninnenfläche begrenzt, welche aus zwei an den Rillenkanten 3 anschließenden Rillenwänden 4 und einem zwischen den radial inneren Enden der Rillenwände 4 verlaufenden Rillengrund 5 gebildet ist. Die Rilleninnenfläche ist daher über die komplette Umfangsrille 1 ausgebildet.

Der Rillengrund 5 verläuft, in Draufsicht betrachtet, gerade und ist gemäß Fig. 1b, im in Draufsicht in axialer Richtung verlaufenden Querschnitt betrachtet (vergl. Lage der Linie Ib-Ib in Fig. 1), flach U-förmig ausgeführt, wobei der Rillengrund 5, im zuletzt erwähnten Querschnitt betrachtet, aus einem auf der Profiltiefe T_{UR} verlaufenden, parallel zur Laufstreifenperipherie ausgerichteten Grundabschnitt 5a sowie zwei seitlichen Rillengrundrundungen 5b zusammengesetzt ist und zwei Rillengrundenden 5e aufweist. Der Grundabschnitt 5a verläuft, in Draufsicht betrachtet, gerade sowie in Umfangsrichtung (Fig. 1a) und weist, im zuletzt erwähnten Querschnitt betrachtet, eine parallel zur Laufstreifenperipherie ermittelte, konstante Breite bₐ von 40% bis 60%, insbesondere von 45% bis 55%, der Breite B_{UR} der Umfangsrille 1 auf.

Wie Fig. 1 ferner zeigt, ist jede Rillenwand 4 jeweils von einer in Umfangsrichtung durchgehenden, regelmäßigen, facettenschliffartigen Flächenanordnung F gebildet, welche - wie noch genauer erläutert wird - aus in in Umfangsrichtung aneinander anschließenden Facettengruppen G angeordneten, dreieckigen Facetten 6a, 6b, 7a, 7b (Fig. 1a) zusammengesetzt ist, wobei je eine Facettengruppe G an der einen Rillenwand 4 einer Facettengruppe G an der anderen Rillenwand 4 direkt gegenüberliegt, also bezüglich der Umfangsrichtung zu dieser versatzfrei ausgebildet ist.

Gemäß Fig. 1a weist jede Facettengruppe G eine von der radialen Richtung und der axialen Richtung aufgespannte Symmetrieebene E_{G} auf, wobei die Facettengruppe G - betrachtet bei Sicht auf die Rillenwand 4 - bezogen auf ihren äußeren Umfang die Form eines in Umfangsrichtung langgestreckten Rechtecks sowie eine entlang der Rillenkante 3 ermittelte Länge c_{G} (Fig. 1) von 5,00 mm bis 40,00 mm, insbesondere von 10,00 mm bis 35,00 mm, bevorzugt von 15,00 mm bis 30,00 mm, aufweist und aus einem radial inneren Facettenbereich 6 und einem radial äußeren Facettenbereich 7 gebildet ist.

Der radial innere Facettenbereich 6 nimmt bezogen auf seinen äußeren Umfang die Form eines in Umfangsrichtung langgestreckten Rechtecks ein, ist von dreieckigen Facetten 6a und dreieckigen Facetten 6b gebildet. Die Facetten 6a, 6b begrenzen dabei zwei in Umfangsrichtung aufeinanderfolgende, an der Symmetrieebene E_{G} aneinander anschließende, pyramidenförmige Erhebungen 6' mit jeweils einer in die Umfangsrille 1 einspringenden Pyramidenspitze S, wobei zwei in radialer Richtung aufeinanderfolgende Facetten 6a gemeinsam mit zwei in Umfangsrichtung aufeinanderfolgenden Facetten 6b je eine der pyramidenförmigen Erhebungen 6' begrenzen. Die dreieckigen Facetten 6b sind jeweils an ihrer dem Rillengrund 5 zuwandten Ecke - bedingt durch die Rillengrundrundungen 5b des Rillengrunds 5 - abgerundet. Unter die Bezeichnung "dreieckige Facette" fallen im Rahmen der Erfindung daher auch dreieckige Facetten mit bedingt durch die Ausgestaltung des Rillengrunds 5 abgerundeten oder abgeschrägten Ecken. Die dreieckigen Facetten 6b mit bedingt durch die Ausgestaltung des Rillengrunds 5 abgerundeten oder abgeschrägten Ecken lassen sich, in Frontansicht (Sichtrichtung senkrecht zur Rillenkante 3) mit parallel zur Laufstreifenperipherie verlaufender Sichtrichtung betrachtet, jeweils gemeinsam mit einem dreieckartigen Rundungsteil 5b' der jeweiligen Rillengrundrundung 5b zu einem kompletten Dreieck ergänzen.

Die Pyramidenspitze S weist - bezogen auf eine in radialer Richtung durch sie hindurchverlaufende Hilfslinie hs - zur Rillenkante 3 einen senkrecht zur Rillenmittellinie m_{UR} (Fig. 1) ermittelten Abstand as von 1,00 mm bis 3,00 mm auf. Entlang der gemeinsamen Seiten der Facetten 6a, 6b befindet sich - entsprechend der pyramidenförmigen Erhebungen 6' - jeweils eine vorspringende Knickkante K₁. An einer vorspringenden Knickkante K₁ schließen die jeweils zusammentreffenden Facetten - ermittelt in Schnittebenen, zu welchen die vorspringende Knickkante K₁ senkrecht verläuft - einen außerhalb der Umfangsrille 1, also im Gummimaterial des Laufstreifens, liegenden Winkel kleiner 180° ein. Entlang der gemeinsamen Seite der Facetten 6b, welche zu aufeinanderfolgenden pyramidenförmigen Erhebungen 6 gehören, verläuft eine rückspringende Knickkante K₂. An einer rückspringenden Knickkante K₂ schließen die jeweils zusammentreffenden Facetten - ermittelt in Schnittebenen, zu welchen die rückspringende Knickkante K₂ senkrecht verläuft - einen innerhalb der Umfangsrille 1 liegenden Winkel kleiner 180° ein.

Der radial äußere Facettenbereich 7 nimmt bezogen auf seinen äußeren Umfang die Form eines in Umfangsrichtung langgestreckten Rechtecks ein und ist von einer die Symmetrieebene E_{G} passierenden, daher zu dieser symmetrischen, an die jeweilige Rillenkante 3 anschließenden, gleichschenkelig-dreieckigen Facette 7a mit einer an der Rillenkante 3 liegenden Dreieckbasis 7a₁ und zwei an der Symmetrieebene E_{G} zusammentreffenden, rechtwinklig-dreieckigen Facetten 7b gebildet. Entlang der gemeinsamen Seiten der Facetten 7a, 7b befindet sich jeweils eine vorspringende Knickkante K₁. Zwischen jeder Facette 7b und der an diese anschließenden Facette 6a verläuft eine weitere vorspringende Knickkante K₁ (betrifft Facettengruppen G der Flächenanordnung F, welche die in Fig. 1a gezeigte, in Fig. 1 rechte Rillenwand 4 bildet) oder eine weitere rückspringende Knickkante K₂ (betrifft Facettengruppen G der Flächenanordnung F, welche die in Fig. 1 linke Rillenwand 4 bildet).

Der radial innere Facettenbereich 6 und der radial äußere Facettenbereich 7 schließen daher - je nach Facettengruppe G - an den beiden zwischen den Facetten 7b und den Facetten 6a verlaufenden, vorspringenden Knickkante K₁ bzw. den beiden zwischen den Facetten 7b und den Facetten 6a verlaufenden, rückspringenden Knickkanten K₂ aneinander an, wobei diese Knickkanten K₁, K₂ in einer in radialer Richtung ermittelten Tiefe tₖ (Fig. 1b) von 20% bis 50%, insbesondere von 25% bis 35%, der Profiltiefe T_{UR} verlaufen.

Zwischen zu aufeinanderfolgenden Gruppen G gehörenden, aneinander anschließenden Facetten 7b sowie zwischen zu aufeinanderfolgenden Gruppen G gehörenden, aneinander anschließenden Facetten 6b ist jeweils eine weitere rückspringenden Knickkante K₂ ausgebildet.

Die Knickkanten K₁, K₂ der regelmäßigen, facettenschliffartigen Flächenanordnung F treffen jeweils an einem Kantenanschlusspunkte P₃, P₄, P₆, P₇ zusammen. An jedem Kantenanschlusspunkt P₃ treffen genau drei, an jedem Kantenanschlusspunkt P₄ treffen genau vier, an jedem Kantenanschlusspunkt P₆ treffen genau sechs und an jedem Kantenanschlusspunkt P₇ treffen genau sieben Knickkanten K₁, K₂ aufeinander. In jeder Gruppe G stellen die zwei Pyramidenspitzen S gleichzeitig einen Kantenanschlusspunkte P₄ dar.

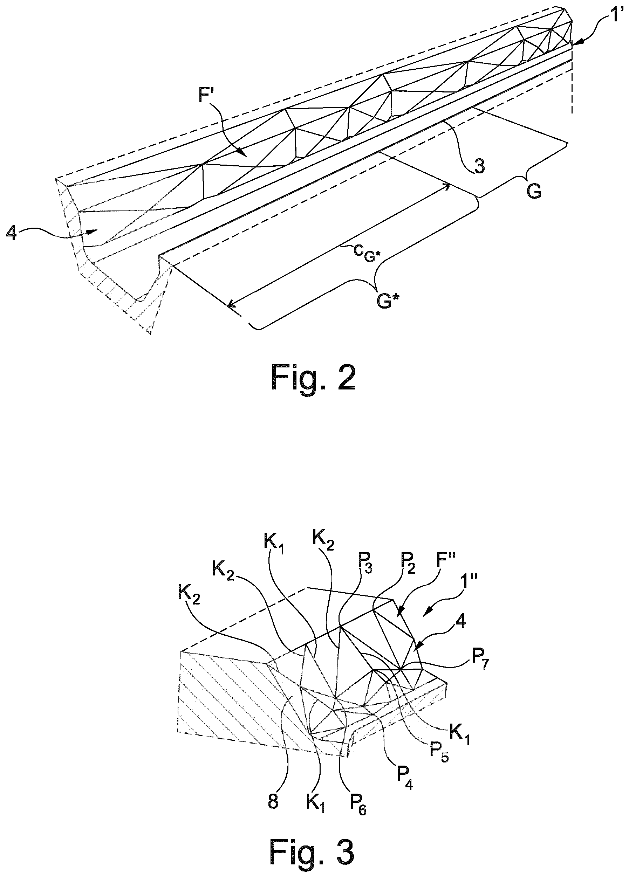

Fig. 2 zeigt einen Umfangsabschnitt einer Umfangsrille 1', welche Rillenwände 4 aus jeweils einer in Umfangsrichtung durchgehenden, regelmäßigen, facettenschliffartigen Flächenanordnung F' aufweist, welche aus in in Umfangsrichtung aneinander anschließenden Facettengruppen G, G* angeordneten Facetten 6a, 6b, 7a, 7b (vergl. Fig. 1a) zusammengesetzt ist, wobei in Umfangsrichtung eine Facettengruppe G abwechselnd auf eine Facettengruppe G* folgt. Die Facettengruppe G* ist gegenüber der Facettengruppe G länger ausgeführt und weist eine entlang der Rillenkante 3 ermittelte Länge c_{G*} von 15,00 mm bis 35,00 mm auf. Bevorzugt sind die Länge c_{G}, c_{G*} derart aufeinander abgestimmt, dass die Länge c_{G*} jeder Facettengruppe G* 105% bis 150%, insbesondere 110% bis 125%, der gemittelten Länge jener beiden Facettengruppen G beträgt, zwischen welchen sich die jeweilige Facettengruppe G* befindet. Die gemittelte Länge der jeweiligen beiden Facettengruppen G ergibt sich durch Addition der beiden Längen c_{G} der Facettengruppen G und anschließendes Teilen der erhaltenen Summe durch zwei.

Fig. 3 zeigt einen Umfangsabschnitt einer Hälfte einer Umfangsrille 1", welche Rillenwände 4 aus jeweils einer in Umfangsrichtung durchgehenden, unregelmäßigen, facettenschliffartigen Flächenanordnung F" aufweist. Die unregelmäßige, facettenschliffartige Flächenanordnung F" setzt sich derart aus verschieden ausgeführten und unterschiedlich orientierten, dreieckigen Facetten 8 zusammen, dass keine sich widerholenden Facettengruppen vorhanden sind. Bevorzugt ist die unregelmäßige, facettenschliffartige Flächenanordnung F" zusätzlich derart gestaltet, dass die Facetten 8 durch ausschließliches Verschieben in Umfangsrichtung nicht aufeinander abbildbar, also nicht ineinander überführbar, sind. Entlang der gemeinsamen Seiten der Facetten 8 befindet sich jeweils eine vorspringende Knickkante K₁ oder eine rückspringende Knickkante K₂, wobei in Fig. 3 leidlich ein paar der Knickkanten K₁, K₂ bezeichnet sind. Die Knickkanten K₁, K₂ der unregelmäßigen, facettenschliffartigen Flächenanordnung F" treffen im gezeigten Umfangsabschnitt jeweils an einem Kantenanschlusspunkt P₂, P₃, P₄, P₆, P₇ zusammen. An jedem Kantenanschlusspunkt P₂, P₅ treffen - analog wie im Zusammenhang mit den Kantenanschlusspunkten P₃, P₄, P₆, P₇ bereits erläutert - genau zwei (Kantenanschlusspunkt P₂) bzw. genau fünf (Kantenanschlusspunkt P₅) Knickkanten K₁, K₂ aufeinander.

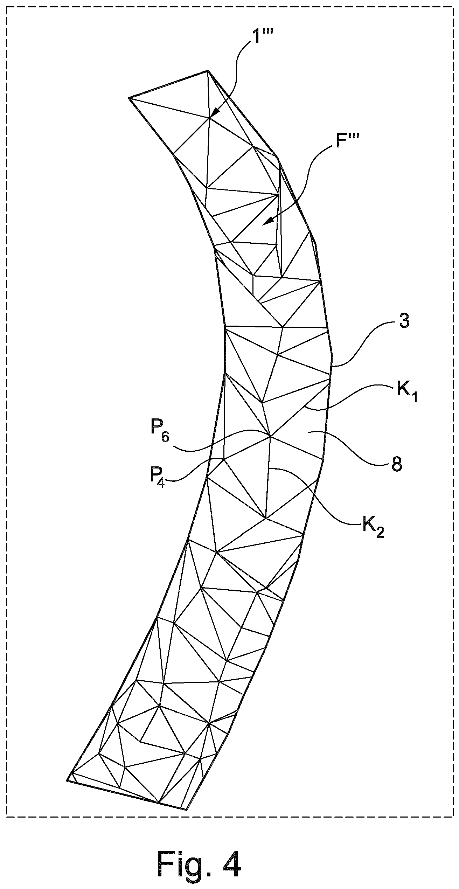

Fig. 4 zeigt eine Schrägansicht auf einen Ausschnitt eines Profilpositivs, also eines Profilblocks oder einer in Umfangsrichtung umlaufenden Profilrippe, eines Laufstreifens, wobei im gezeigten Ausschnitt eine in Draufsicht langgestreckte, als Sackrille ausgeführte Rille 1‴ verläuft. Die Rille 1‴ weist zwei entlang ihrer Längserstreckung verlaufende Rillenkanten 3 auf und ist durch eine zu den Rillenkanten 3 reichende Rilleninnenfläche begrenzt, welche aus einer die komplette Rilleninnenfläche einnehmenden, unregelmäßigen, facettenschliffartigen Flächenanordnung F‴ aus unterschiedlich orientierten, dreieckigen Facetten 8 gebildet ist. Entlang der gemeinsamen Seiten der Facetten 8 befindet sich jeweils eine vorspringende Knickkante K₁ oder eine rückspringende Knickkante K₂. Die Knickkanten K₁, K₂ der Flächenanordnung F‴ treffen - in entsprechender analoger Weise zu den bereits erläuterten Ausführungsvarianten - unter anderem an Kantenanschlusspunkten P₄ und P₆ zusammen.

Die Knickkanten K₁, K₂ weisen bei den beschriebenen Ausführungsbeispielen jeweils eine Kantenlänge von 2,00 mm bis 15,00 mm auf. Insbesondere gehören zu den Knickkanten K₁, K₂ solche, deren Kantenlänge 2,50 mm bis 10,00 mm, bevorzugt 3,00 mm bis 7,50 mm, besonders bevorzugt 4,00 mm bis 7,00 mm, am meisten bevorzugt 5,00 mm bis 6,00 mm, beträgt.

Die Facetten 6a, 6b, 7a 7b, 8 verlaufen, in in Draufsicht senkrecht zur Rillenmittellinie m_{UR} verlaufenden Schnitten betrachtet, zur radialen Richtung unter einem Winkel von 0° bis 55°, insbesondere von 5° bis 45°, bevorzugt von 15° bis 35°, besonders bevorzugt von 20° bis 30°. Ferner verlaufen die Facetten 6a, 6b, 7a 7b, 8, in in Draufsicht parallel zur Laufstreifenperipherie verlaufenden Schnitten betrachtet, relativ zur in die Schnittebene in radialer Richtung projizierten Rillenmittellinie m_{UR} unter einem Winkel von 3° bis 25°, insbesondere von 5° bis 20°.

Die Erfindung ist auf die beschriebenen Ausführungsbeispiele nicht beschränkt.

Die facettenschliffartige Flächenanordnung kann an Rilleninnenflächen von beliebigen Profilpositive voneinander trennenden oder in Profilpositiven verlaufenden, in Draufsicht langgestreckten Rillen mit einer gegenüber dem Niveau der Rillenkanten in radialer Richtung ermittelten, maximalen Tiefe (Tiefe an der tiefsten Stelle) von 30% bis 100%, insbesondere von zumindest 50%, bevorzugt von zumindest 70%, der Profiltiefe und einer als kleinstmöglichen Abstand zwischen den Rillenkanten ermittelten Breite an der breitesten Stelle von 5,00 mm bis 15,00 mm vorgesehen sein. Es ist zumindest ein Teil der Rilleninnenfläche von der facettenschliffartigen Flächenanordnung eingenommen, wobei auch mehrere, je einen Teil der Rilleninnenfläche einnehmende, facettenschliffartige Flächenanordnungen vorgesehen sein können. Die facettenschliffartige(n) Flächenanordnung(en) nimmt bzw. nehmen gemeinsam insbesondere zumindest 25%, bevorzugt zumindest 40%, besonders bevorzugt zumindest 50%, und am besten bevorzugt 75% bis 100% des Flächeninhalts der Rilleninnenfläche ein. Die Rillen mit der bzw. den facettenschliffartigen Flächenanordnung(en) sind vorzugsweise innerhalb von bis zur Laufstreifenperipherie reichenden Profilpositiven ausgebildet oder trennen derartige Profilpositive voneinander, sodass die Rillen bevorzugt an der Laufstreifenperipherie liegende Rillenkanten aufweisen. Die Laufstreifenperipherie ist bekannter Weise jenes Niveau, gegenüber welchem die Profiltiefe ermittelt ist.

### Bezugszeichenliste

- 1, 1', 1": Umfangsrille
- 1‴: Rille
- 2: Profilrippe
- 3: Rillenkante
- 4: Rillenwand
- 5: Rillengrund
- 5a: Grundabschnitt
- 5b: Rillengrundrundung
- 5b: Rundungsteil
- 5e: Rillengrundende
- 6: radial äußerer Facettenbereich
- 6: Erhebung
- 6a: Facette
- 6b: Facette
- 6c: Facette
- 7: radial innerer Facettenbereich
- 7a: Facette
- 7a₁: Dreieckbasis
- 7b: Facette
- 8: Facette
- a_{S}: Abstand
- bₐ, B_{UR}: Breite
- c_{G}, c_{G*}: Länge
- E_{G}: Symmetrieebene
- F, F', F", F‴: facettenschliffartige Flächenanordnung
- h_{S}: Hilfslinie
- K₁: vorspringende Knickkante
- K₂: rückspringende Knickkante
- G, G*: Facettengruppe
- m_{UR}: Rillenmittellinie
- P₂, P₃, P₄, P₅, P₆, P₇: Kantenanschlusspunkt
- S: Pyramidenspitze
- tₐ, tₖ: Tiefe
- T_{UR}: Profiltiefe

## Patentansprüche

1. Fahrzeugreifen mit einem Laufstreifen mit in Draufsicht langgestreckten Rillen (1, 1', 1", 1‴) mit insbesondere an der Laufstreifenperipherie verlaufenden Rillenkanten (3), einer maximalen Tiefe (T_{UR}) von 30% bis 100% der Profiltiefe, einer als kleinstmöglichen Abstand zwischen den Rillenkanten (3) ermittelten Breite (B_{UR}) an der breitesten Stelle von 5,00 mm bis 15,00 mm und einer bis zu den Rillenkanten (3) reichenden, über die komplette Rille (1, 1', 1", 1‴) ausgebildeten, diese begrenzenden Rilleninnenfläche (4, 5), wobei zumindest ein Teil der Rilleninnenfläche (4, 5) von einer facettenschliffartigen Flächenanordnung (F, F', F", F‴) mit vorspringenden Knickkanten (K₁) und rückspringenden Knickkanten (K₂) eingenommen ist, wobei die facettenschliffartige Flächenanordnung (F, F', F", F‴) aus an den Knickkanten (K₁, K₂) aneinander anschließenden, dreieckigen Facetten (6a, 6b, 7a, 7b, 8) gebildet ist und wobei die Knickkanten (K₁, K₂) an Kantenanschlusspunkten (P₂, P₃, P₄, P₅, P₆, P₇) zusammentreffen,
**dadurch gekennzeichnet,**
**dass** zu den Kantenanschlusspunkten (P₂, P₃, P₄, P₅, P₆, P₇) solche gehören, an welchen zumindest sechs Knickkanten (K₁, K₂) der facettenschliffartigen Flächenanordnung (F, F', F", F‴) zusammentreffen.

2. Fahrzeugreifen nach Anspruch 1, **dadurch gekennzeichnet, dass** die facettenschliffartige(n) Flächenanordnung(en) (F, F', F", F‴) zumindest 25%, bevorzugt zumindest 40%, besonders bevorzugt zumindest 50%, am meisten bevorzugt 75% bis 100%, des Flächeninhalts der Rilleninnenfläche (4, 5) einnimmt bzw. einnehmen.

3. Fahrzeugreifen nach Anspruch 1 oder 2, **dadurch gekennzeichnet, dass** zu den Kantenanschlusspunkten (P₂, P₃, P₄, P₅, P₆, P₇) solche gehören, an welchen jeweils zumindest eine, bevorzugt zumindest zwei, besonders bevorzugt zumindest drei, vorspringende Knickkante(n) (K₁) und zumindest eine, bevorzugt zumindest zwei, besonders bevorzugt zumindest drei, rückspringende Knickkante(n) (K₂) zusammentreffen.

4. Fahrzeugreifen nach einem der Ansprüche 1 bis 3, **dadurch gekennzeichnet, dass** zu den Kantenanschlusspunkten (P₂, P₃, P₄, P₅, P₆, P₇) solche gehören, an welchen jeweils zwei, drei, vier, fünf, sechs oder sieben Knickkanten (K₁, K₂) zusammentreffen
und/oder
dass zu den Kantenanschlusspunkten (P₄, P₅, P₆, P₇) solche gehören, an welchen jeweils ausschließlich vorspringende Knickkanten (K₁) oder ausschließlich rückspringende Knickkanten (K₂) zusammentreffen.

5. Fahrzeugreifen nach einem der Ansprüche 1 bis 4, **dadurch gekennzeichnet, dass** die facettenschliffartige Flächenanordnung (F, F') regelmäßig ist, wobei die dreieckigen Facetten (6a, 6b, 7a, 7b), in Draufsicht betrachtet, in Längserstreckungsrichtung der Rille (1) aufeinanderfolgenden, sich widerholenden Facettengruppen (G, G*) angeordnet sind.

6. Fahrzeugreifen nach Anspruch 5, **dadurch gekennzeichnet, dass** aneinander anschließende Facetten (6b, 7b), welche zu aufeinanderfolgenden Gruppen (G, G*) gehören, jeweils über eine der rückspringenden Knickkanten (K₂) aneinander anschließen.

7. Fahrzeugreifen nach Anspruch 5 oder 6, **dadurch gekennzeichnet, dass** die Facettengruppen (G, G*) jeweils eine entlang der Rillenkante (3) ermittelte Länge (c_{G}, c_{G*}) von 5,00 mm bis 40,00 mm, insbesondere von 10,00 mm bis 35,00 mm, bevorzugt von 15,00 mm bis 30,00 mm, aufweisen.

8. Fahrzeugreifen nach Anspruch 7, **dadurch gekennzeichnet, dass** zu den Facettengruppen (G, G*) erste Facettengruppen (G) und zweite Facettengruppen (G*) gehören, wobei die Längen (c_{G}) der ersten Facettengruppen (G) übereinstimmen und die Längen (c_{G*}) der zweiten Facettengruppen (G*) übereinstimmen und wobei die Länge (c_{G}) jeder ersten Facettengruppe (G) kleiner ist als die Längen (c_{G*}) jeder zweiten Facettengruppe (G*).

9. Fahrzeugreifen nach Anspruch 8, **dadurch gekennzeichnet, dass** die ersten und die zweiten Facettengruppen (G, G*) die einzigen Facettengruppen (G, G*) sind, wobei innerhalb der Rille (1) eine der ersten Fettengruppen (G) abwechselnd auf eine der zweiten Facettengruppen (G*) folgt.

10. Fahrzeugreifen nach einem der Ansprüche 1 bis 4, **dadurch gekennzeichnet, dass** die facettenschliffartige Flächenanordnung (F") unregelmäßig ist, wobei die dreieckigen Facetten (8) derart verschieden ausgeführt und unterschiedlich orientiert sind, dass aneinander anschließende, dreieckige Facetten (8) keine sich widerholenden Facettengruppen bilden.

11. Fahrzeugreifen nach Anspruch 10, **dadurch gekennzeichnet, dass** die unregelmäßige, facettenschliffartige Flächenanordnung (F") derart gestaltet ist, dass die dreieckigen Facetten (8) durch ausschließliches Verschieben in Längserstreckungsrichtung der Rille (1) nicht aufeinander abbildbar, also nicht ineinander überführbar, sind.

12. Fahrzeugreifen nach einem der Ansprüche 1 bis 11, **dadurch gekennzeichnet, dass** zu den Rillen (1, 1', 1", 1‴) solche gehören, deren Rilleninnenfläche (4, 5) von an die Rillenkanten (3) anschließenden Rillenwänden (4) und einem zwischen den radial inneren Enden der Rillenwände (4) ausgebildeten, im Querschnitt der Rille (1, 1', 1") zumindest abschnittsweise gerundet oder abschnittsweise parallel zur Laufstreifenperipherie verlaufenden Rillengrund (5) gebildet ist, wobei mindestens ein Teil von zumindest der einen Rillenwand (4), insbesondere die komplette Rillenwand (4), von der facettenschliffartigen Flächenanordnung (F, F', F", F‴) eingenommen ist und wobei am Rillengrund (5) vorzugsweise keine facettenschliffartige Flächenanordnung (F, F', F", F‴) vorhanden ist.

13. Fahrzeugreifen nach einem der Ansprüche 5 bis 9 und nach Anspruch 12, **dadurch gekennzeichnet, dass** jede Facettengruppe (G) - betrachtet bei Sicht auf die Rillenwand (4) - bezogen auf ihren äußeren Umfang die Form eines in Längserstreckungsrichtung der Rille (1) langgestreckten Rechtecks aufweist und aus einem radial inneren Facettenbereich (6) und einem radial äußeren Facettenbereich (7) gebildet ist,
wobei der radial innere Facettenbereich (6) von in Längserstreckungsrichtung der Rille (1) aufeinanderfolgenden, pyramidenförmigen Erhebungen (6'), insbesondere von zwei pyramidenförmigen Erhebungen (6'), mit jeweils einer in die Rille (1) einspringenden Pyramidenspitze (S) gebildet ist, wobei jede pyramidenförmige Erhebung (6') von zwei in radialer Richtung aufeinanderfolgende Facetten (6a) und zwei in Längserstreckungsrichtung der Rille (1) aufeinanderfolgenden Facetten (6b) begrenzt ist und
wobei der radial äußere Facettenbereich (7) von einer an die Rillenkante (3) anschließenden, dreieckigen, insbesondere gleichschenkelig-dreieckigen, ersten Facette (7a) mit einer an der Rillenkante (3) liegenden Dreieckbasis (7a₁) und zwei rechtwinklig-dreieckigen, zweiten Facetten (7b) gebildet ist,
wobei die erste Facette (7a) an jede zweite Facette (7b) über eine der vorspringenden Knickkanten (K₁) und jede zweite Facette (7b) an die radial äußere der zwei in radialer Richtung aufeinanderfolgende Facetten (6a), welche eine der pyramidenförmigen Erhebungen (6') mitbegrenzen, jeweils über eine der rückspringenden Knickkanten (K₂) oder über eine der vorspringenden Knickkanten (K₁) anschließt.

14. Fahrzeugreifen nach einem der Ansprüche 1 bis 13, **dadurch gekennzeichnet, dass** die Knickkanten (K₁, K₂) jeweils eine Kantenlänge von 2,00 mm bis 15,00 mm aufweisen, wobei zu den Knickkanten (K₁, K₂) insbesondere solche gehören, deren Kantenlänge 2,50 mm bis 10,00 mm, bevorzugt 3,00 mm bis 7,50 mm, besonders bevorzugt 4,00 mm bis 7,00 mm, am meisten bevorzugt 5,00 mm bis 6,00 mm, beträgt.

15. Fahrzeugreifen nach einem der Ansprüche 1 bis 14, **dadurch gekennzeichnet, dass** die Rillenkanten (3), in Draufsicht betrachtet, gerade verlaufen, oder aus gerade verlaufenden Kantenabschnitten zusammengesetzt sind,
wobei die Facetten (6a, 6b, 7a 7b, 8), in in Draufsicht senkrecht zur Rillenmittellinie (m_{UR}) verlaufenden Schnitten betrachtet, zur radialen Richtung unter einem Winkel von 0° bis 55°, insbesondere von 5° bis 45°, bevorzugt von 15° bis 35°, besonders bevorzugt von 20° bis 30° verlaufen und/oder
wobei die Facetten (6a, 6b, 7a 7b, 8), in in Draufsicht parallel zur Laufstreifenperipherie verlaufenden Schnitten betrachtet, relativ zur in die Schnittebene in radialer Richtung projizierten Rillenmittellinie (m_{UR}) unter einem Winkel von 3° bis 25°, insbesondere von 5° bis 20°, verlaufen.
